# EUROPEAN PATENT SPECIFICATION

(11) **EP 3 081 396 B1**
(45) Date of publication and mention of the grant of the patent: **17.06.2020**
(21) Application number: 16159943.6
(22) Date of filing: 11.03.2016
(51) Int. Cl.: B60C 9/18, B60C 9/00, B60C 9/20

(54) **A BIDIRECTIONAL MONOBELT CONSTRUCTION FOR A PNEUMATIC TIRE**
BIDIREKTIONALE EINGÜRTELKONSTRUKTION FÜR EINEN LUFTREIFEN
CONSTRUCTION MONO-COURROIE BIDIRECTIONNELLE POUR UN PNEUMATIQUE

(30) Priority: 31.03.2015 US 201514674248
(43) Date of publication of application: 19.10.2016
(73) Proprietor: The Goodyear Tire & Rubber Company, Akron, Ohio 44316 (US)
(72) Inventor: MUTHIGI, Phaniraj, Copley, OH 44321 (US); HUBELL, David Ray, Hartville, OH 44632 (US); GILLICK, James Gregory, Akron, OH 44313 (US); LACO, Joseph Henry, Akron, OH 44310 (US); DANDO, Rebecca Lee, Uniontown, OH 44685 (US); SANKAR, Vaidyanathan, L-9137 Schieren (LU); ROYER, Thierry, B-6700 Frassem (BE); BONNET, Gilles, L-9176 Niederfeulen (LU)
(74) Representative: Kutsch, Bernd

(56) References cited:
- EP-A2- 0 501 782
- EP-A2- 2 439 082
- EP-A2- 2 671 730
- US-A- 1 488 343

## Description

### Field of the Invention

The present invention relates to a pneumatic tire, and more particularly, to a belt construction for a pneumatic tire.

### Background of the Invention

A pneumatic tire typically includes a pair of axially separated inextensible beads. A circumferentially disposed bead filler apex extends radially outward from each respective bead. At least one carcass ply extends between the two beads. The carcass ply usually has axially opposite end portions, each of which is turned up around a respective bead and secured thereto. Tread rubber and sidewall rubber is located axially and radially outward, respectively, of the carcass ply. Often, a belt structure is disposed radially between the carcass ply and tread rubber.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as polyamide/nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A conventional belt structure comprises a plurality of reinforcement layers in which cords are laid parallel to each other. Due to the unidirectional load carrying capability of each reinforcement layer, an even number of such layers may be stacked up to manage the force transfer in opposite directions. Two such reinforcement layers of steel wires are often used as a belt-package in a typical radial passenger tire, contributing significant weight to the pneumatic tire.

EP-A-2 671 730 describes a pneumatic tire comprising a belt package having a first, radially outer, and a second, radially inner, belt ply layer. The cords in the first and second belt ply layer respectively are oriented in such a way that they cross each other in top view.

EP-A-0 501 782 also describes a belt comprising at least two belt ply layers with cords crossing each other. The belt ply layers are formed by winding a belt ply strip in a zigzag manner.

EP-A-2 439 082 describes a tire in accordance with the preamble of claim 1 with a belt structure comprising a layer of crimped metallic cords.

US1488343 discloses a tri-directional wide-meshed rubberized web used as breaker strip.

### Summary of the Present Invention

The invention relates to a pneumatic tire in accordance with claim 1.

Dependent claims refer to preferred embodiments of the invention.

A pneumatic tire in accordance with the present invention includes a carcass reinforced by a carcass ply extending from a first bead to a second bead and a single belt ply (or layer) disposed radially outward of the carcass ply in a crown portion of the pneumatic tire. The single belt ply includes a first group of cords oriented in a first direction relative to a centerline of the pneumatic tire and a second group of cords oriented in a second direction relative to the centerline of the pneumatic tire. The first direction may be, for example, equal and opposite to the second direction.

According to another aspect of the pneumatic tire, the first group of cords has a linear density value in the range between 1000 dtex to 4000 dtex.

According to still another aspect of the pneumatic tire, the first group of cords has a structure of one single polyamide/nylon core yarn and two, and only two, aramid wrap yarns.

According to yet another aspect of the pneumatic tire, the first group of cords has an end count of cord ends per inch in the range between 15-32.

According to still another aspect of the pneumatic tire, the second group of cords has a linear density value in the range between 1000 dtex to 2000 dtex.

According to yet another aspect of the pneumatic tire, the second group of cords has a linear density value in the range between 3000 dtex to 4000 dtex.

According to still another aspect of the pneumatic tire, the second group of cords has a structure of one single polyamide/nylon core yarn and two, and only two, aramid wrap yarns.

According to yet another aspect of the pneumatic tire, the second group of cords has an end count of cord ends per inch in the range between 15-32.

A method for designing a pneumatic tire includes the step of replacing a first belt and a second belt with a single third belt, the third belt comprising a first group of cords oriented in a first direction relative to a centerline of the pneumatic tire and a second group of cords oriented in a second direction relative to the centerline of the pneumatic tire, the first direction, for example, being equal and opposite to the second direction.

### Definitions

"Axial" and "Axially" mean the lines or directions that are parallel to the axis of rotation of the tire.

"Carcass" means the tire structure apart from the belt structure, tread, undertread over the plies, but including the beads.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Equatorial Plane" means the plane perpendicular to the tire's axis of rotation and passing through the center of its tread; or the plane containing the circumferential centerline of the tread.

"Lateral" means a direction parallel to the axial direction.

"Ply" means a cord-reinforced layer of rubber-coated radially deployed or otherwise parallel cords.

"Radial" and "radially" mean directions radially toward or away from the axis of rotation of the tire.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire for use with the present invention;
FIG. 2 represents a schematic detail view of the bead region of the example tire shown in FIG. 1; and
FIG. 3 represents a schematic detail view of a single belt ply in accordance with the present invention.

### Detailed Description of Example Embodiments of the Present Invention

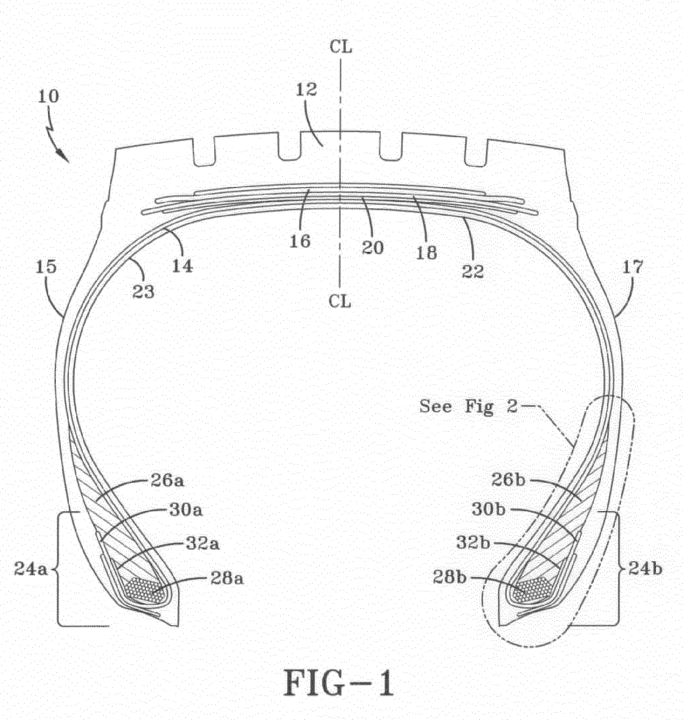

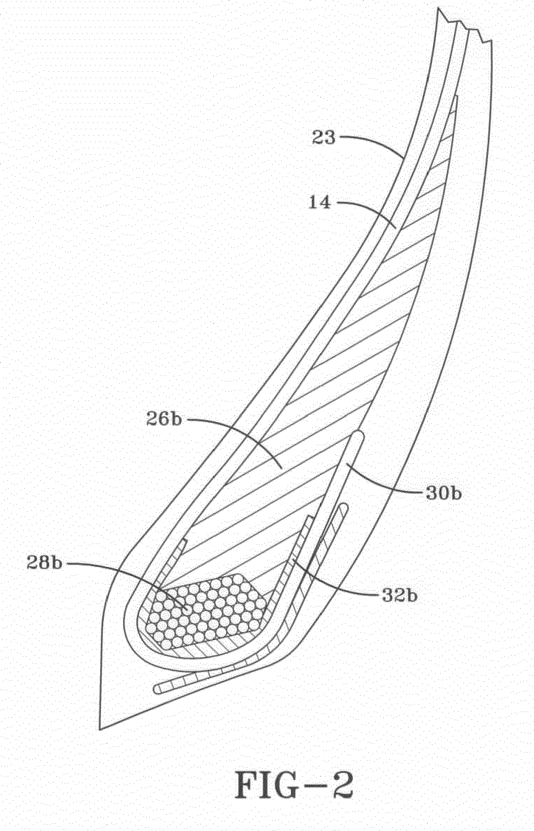

FIGS. 1 and 2 show an example tire 10 for use with reinforcing structures, such as flippers and chippers. The example tire 10 has a tread 12, an inner liner 23, an overlay 16, a belt structure comprising belts 18, 20, a carcass 22 with a single carcass ply 14, two sidewalls 15,17, and two bead regions 24a, 24b comprising bead filler apexes 26a, 26b and beads 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Each axial end portion 30a or 30b of the carcass ply 14 is turned up and around the respective bead 28a, 28b to a position sufficient to anchor each axial end portion 30a, 30b, as seen in detail in FIG. 2.

The carcass ply 14 may be a rubberized ply having a plurality of substantially parallel carcass reinforcing members made of such material as polyester, rayon, or similar suitable organic polymeric compounds. The carcass ply 14 may engage the axial outer surfaces of two flippers 32a, 32b.

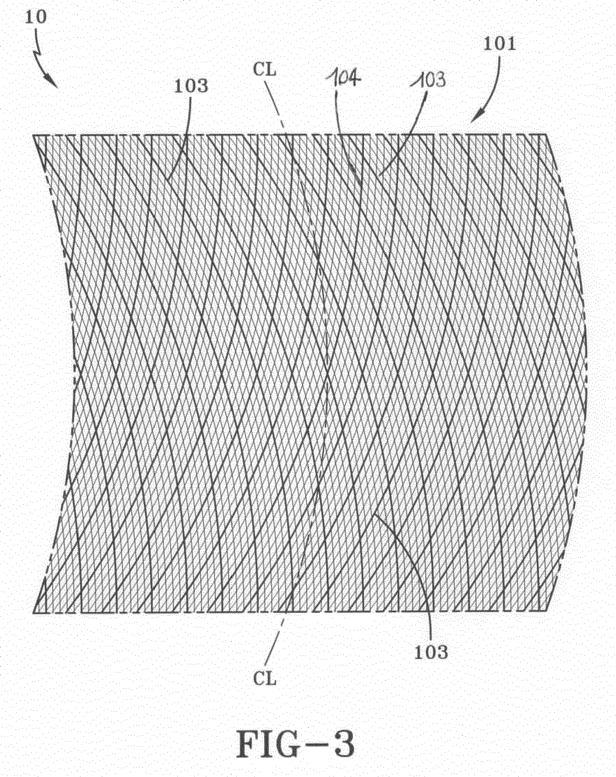

In accordance with the present invention, as shown in FIG. 3, the belts 18, 20 are replaced by a single bidirectional belt layer 101 for reducing weight without degrading performance of the tire 10. Preferably, the single bidirectional belt layer 101 comprises a first set of cords 103 or filaments extending in parallel along a first direction and a second set of cords or filaments 104 extending in parallel along a second direction. The angle between the first direction and the second direction is preferably in a range of from 15 to 55 degrees, more preferably 25 to 35 degrees such as about 30 degrees, i.e. the cords 103 cross the cords 104. The single bidirectional belt layer 101 is a rubberized ply layer. Preferably, the first set of cords 103 and the second set of cords 104 within the single bidirectional belt layer 101 are arranged symmetrically with respect to the equatorial plane CL of the tire 10.

The two-dimensional structural characteristics of the single bidirectional belt layer 101 may be achieved with such a single reinforcement in which rubberized yarns/cords 103 are oriented in several directions (e.g., the two directions of the otherwise used two belt 18, 20 construction). A further advantage to this structure is that forces are counteracted internally to the singe belt layer 101 rather than forces being counteracted between several layers (e.g., the belts 18, 20). Steel cords may also be replaced with lighter fiber cords 103 in this construction without degrading other functional properties of the tire 10. Such a single belt layer 101 may be wound in a continuous fashion preferably using high performance fibers. In the two bidirectional example of FIG. 3, the cords 103, 104 may be interlaced or radially separate. Both provide a reduced weight to the conventional two belt 18, 20 approach.

The cords 103, 104 may be for instance nylon cords, aramid cords, polyamide cords, polyester cords, hybrid cords comprising at least two different materials, or steel cords or Kevlar cords. Preferably, the cords (or filaments) 103 and the cords (or filaments) 104 are of the same construction using the same materials.

In a preferred embodiment, the first group of cords 103 has a linear density value in the range of from 1000 dtex to 4000 dtex or from 1500 dtex to 3000 dtex such as 2500 dtex. Preferably, the first group of cords 103 has a structure of one single polyamide/nylon core yarn and only two aramid wrap yarns. The first group of cords 103 preferably has an end count of cord ends per 2.54 cm (inch) in the range of from 15 - 32 or from 20 to 27.

In a preferred embodiment, the second group of cords 104 has a linear density value in the range of from 1000 dtex to 2000 dtex or from 1300 dtex to 1700 dtex such as 1500 dtex or from 3000 dtex to 4000 dtex or from 3300 dtex to 3700 dtex such as 3500 dtex. Alternatively, the linear density of the second group of cords 104 may be the same as the linear density of the first group of cords 103. Preferably, the second group of cords 104 has a structure of one single polyamide/nylon core yarn and only two aramid wrap yarns. The second group of cords 104 preferably has an end count of cord ends per 2.54 cm (inch) in the range of from 15 - 32 or from 20 to 27.

As stated above, a single belt or single belt layer 101 in accordance with the present invention may produce reduced weight with comparable performance in a tire 10. This single belt layer 101 thus lightens the tire 10 with essentially no performance tradeoff, even though the complexities of the structure and behavior of the pneumatic tire are such that no complete and satisfactory theory has been propounded.

A pneumatic tire has certain essential structural elements. United States Department of Transportation, Mechanics of Pneumatic Tires, pages 207-208 (1981). An important structural element is the belt, typically made up of many flexible, high modulus cords of natural textile, synthetic polymer, glass fiber, or fine hard drawn steel embedded in, and bonded to, a matrix of low modulus polymeric material, usually natural or synthetic rubber. Id. at 207 through 208. The flexible, high modulus cords are usually disposed as two belts. Id. at 208. Tire manufacturers throughout the industry cannot agree or predict the effect of different twists of cords on noise characteristics, handling, durability, comfort, etc. in pneumatic tires, Mechanics of Pneumatic Tires, pages 80 through 85. Thus, for example, when a belt structure of a pneumatic tire 10 is modified with the intent to improve one functional property of the pneumatic tire, any number of other functional properties may be unacceptably degraded. Furthermore, the interaction between the belt (e.g., bidirectional cords, etc.) and the carcass ply, overlay, tread, bead/apex may also unacceptably affect the functional properties of the pneumatic tire. A modification of the carcass ply may not even improve that one functional property because of these complex interrelationships. Thus, as stated above, the complexity of the interrelationships of the multiple components makes the actual result of modification of a carcass ply, in accordance with the present invention, impossible to predict or foresee from the infinite possible results. Only through extensive experimentation has the single belt 101 of the present invention been revealed as an excellent, unexpected, and unpredictable option for a complete belt structure.

## Claims

1. A pneumatic tire (10) comprising a carcass (22) reinforced by one or more carcass plies (14) extending from a first bead to a second bead (28a, 28b) and having a single belt layer (101) disposed radially outward of the one or more carcass plies (14) in a crown portion of the pneumatic tire (10), the single belt layer (101) comprising a first group of cords (103) oriented in a first direction relative to a centerline (CL) of the pneumatic tire (10) and a second group of cords (104) oriented in a second direction relative to the centerline (CL) of the pneumatic tire (10), **characterized in that** the single belt layer (101) is a single bidirectional rubberized belt ply layer (101).

2. The pneumatic tire of claim 1 wherein the first group of cords (103) has a linear density value in the range of from 1000 dtex to 4000 dtex.

3. The pneumatic tire of claim 1 or 2 wherein the first group of cords (103) has a structure of one single polyamide/nylon core yarn and only two aramid wrap yarns.

4. The pneumatic tire of claim 1, 2 or 3 wherein the first group of cords (103) has an end count of cord ends per 2.54 cm in the range of from 15 - 32.

5. The pneumatic tire of at least one of the previous claims wherein the second group of cords (104) has a linear density value in the range of from 1000 dtex to 2000 dtex.

6. The pneumatic tire of at least one of the previous claims 1 to 4 wherein the second group of cords (104) has a linear density value in the range of from 3000 dtex to 4000 dtex.

7. The pneumatic tire of at least one of the previous claims wherein the second group of cords (104) has a structure of one single polyamide/nylon core yarn and only two aramid wrap yarns.

8. The pneumatic tire of at least one of the previous claims wherein the second group of cords has an end count of cord ends per 2.54 cm in the range of from 15 - 32.

9. The pneumatic tire of at least one of the previous claims wherein the angle between the first direction and the second direction is in a range of from 15 to 55 degrees.

10. The pneumatic tire of claim 9 wherein the angle is in a range of from 25 to 35 degrees such as about 30 degrees.

## Patentansprüche

1. Luftreifen (10), der eine Karkasse (22) umfasst, die durch eine oder mehrere Karkassengewebelagen (14) verstärkt ist, die sich aus einer ersten Wulst zu einer zweiten Wulst (28a, 28b) erstrecken und eine einzelne Gürtelschicht (101) aufweisen, die radial nach außen der einen oder der mehreren Karkassengewebelagen (14) in einem Laufstreifenabschnitt des Luftreifens (10) angeordnet ist, wobei die einzelne Gürtelschicht (101) eine erste Gruppe aus Korden (103), die einer ersten Richtung relativ zu einer Mittellinie (CL) des Luftreifens (10) ausgerichtet ist, und eine zweite Gruppe aus Korden (104), die in einer zweiten Richtung relativ zu der Mittellinie des Luftreifens (10) ausgerichtet ist, umfasst, **dadurch gekennzeichnet, dass** die einzelne Gürtelschicht (101) eine einzelne bidirektionale kautschutierte Gürtelgewebelagenschicht (101) ist.

2. Luftreifen nach Anspruch 1, wobei die erste Gruppe aus Korden (103) einen linearen Dichtewert in dem Bereich von 1000 dtex bis 4000 dtex aufweist.

3. Luftreifen nach Anspruch 1 oder 2, wobei die erste Gruppe aus Korden (103) eine Struktur aus einem einzelnen Polyamid/Nylon-Kerngarn und nur zwei Aramid-Wickelgarnen aufweist.

4. Luftreifen nach Anspruch 1, 2 oder 3, wobei die erste Gruppe aus Korden (103) eine Endanzahl von Kordenden pro 2,54 cm in dem Bereich von 15 - 32 aufweist.

5. Luftreifen nach wenigstens einem der vorhergehenden Ansprüche, wobei die zweite Gruppe aus Korden (104) einen linearen Dichtewert in dem Bereich von 1000 dtex bis 2000 dtex aufweist.

6. Luftreifen nach wenigstens einem der vorhergehenden Ansprüche 1 bis 4, wobei die zweite Gruppe aus Korden (104) einen linearen Dichtewert in dem Bereich von 3000 dtex bis 4000 dtex aufweist.

7. Luftreifen von wenigstens einem der vorhergehenden Ansprüche, wobei die zweite Gruppe aus Korden (104) eine Struktur aus einem einzelnen Polyamid/Nylon-Kerngarn und nur zwei Aramid-Wickelgarnen aufweist.

8. Luftreifen nach wenigstens einem der vorhergehenden Ansprüche, wobei die zweite Gruppe aus Korden eine Endanzahl von Kordenden pro 2,54 cm in dem Bereich von 15 - 32 aufweist.

9. Luftreifen nach wenigstens einem der vorhergehenden Ansprüche, wobei der Winkel zwischen der ersten Richtung und der zweiten Richtung in einem Bereich von 15 bis 55 Grad liegt.

10. Luftreifen nach Anspruch 9, wobei der Winkel in einem Bereich von 25 bis 35 Grad, wie etwa ungefähr 30 Grad, beträgt.

## Revendications

1. Bandage pneumatique (10) comprenant une carcasse (22) renforcée par une ou plusieurs nappes de carcasse (14) s'étendant à partir d'un premier talon jusqu'à un second talon (28a, 28b) et possédant une couche de ceinture unique (101) disposée en direction radiale à l'extérieur desdites une ou plusieurs nappes de carcasse (14) dans une portion de sommet du bandage pneumatique (10), la couche de ceinture unique (101) comprenant un premier groupe de câblés (103) qui sont orientés dans une première direction par rapport à une ligne médiane (CL) du bandage pneumatique (10) et un second groupe de câblés (104) qui sont orientés dans une seconde direction par rapport à la ligne médiane (CL) du bandage pneumatique (10) ; **caractérisé en ce que** la couche de ceinture unique (101) représente une couche de nappe de ceinture unique caoutchouteuse bidirectionnelle (101).

2. Bandage pneumatique selon la revendication 1, dans lequel le premier groupe de câblés (103) possède une valeur de densité linéaire dans la plage de 1000 dtex à 4000 dtex.

3. Bandage pneumatique selon la revendication 1 ou 2, dans lequel le premier groupe de câblés (103) possède une structure constituée par un seul fil central de polyamide/nylon et par seulement deux fils de chaîne en aramide.

4. Bandage pneumatique selon la revendication 1, 2 ou 3, dans lequel le premier groupe de câblés (103) possède un nombre de bouts de câblés par 2,54 cm dans la plage de 15 à 32.

5. Bandage pneumatique selon au moins une des revendications précédentes, dans lequel le second groupe de câblés (104) possède une valeur de densité linéaire dans la plage de 1000 dtex à 2000 dtex.

6. Bandage pneumatique selon au moins une des revendications 1 à 4, dans lequel le second groupe de câblés (104) possède une valeur de densité linéaire dans la plage de 3000 dtex à 4000 dtex.

7. Bandage pneumatique selon au moins une des revendications précédentes, dans lequel le second groupe de câblés (104) possède une structure constituée par un seul fil central de polyamide/nylon et par seulement deux fils de chaîne en aramide.

8. Bandage pneumatique selon au moins une des revendications précédentes, dans lequel le second groupe de câblés possède un nombre de bouts de câblés par 2,54 cm dans la plage de 15 à 32.

9. Bandage pneumatique selon au moins une des revendications précédentes, dans lequel l'angle formé entre la première direction et la seconde direction se situe dans une plage de 15 à 55 degrés.

10. Bandage pneumatique selon la revendication 9, dans lequel l'angle se situe dans une plage de 25 à 35 degrés, et représente par exemple un angle s'élevant à environ 30 degrés.
